# EUROPÄISCHE PATENTSCHRIFT

(11) **EP 1 915 543 B1**
(45) Veröffentlichungstag und Bekanntmachung des Hinweises auf die Patenterteilung: **26.03.2014**
(21) Anmeldenummer: 06776601.4
(22) Anmeldetag: 04.08.2006
(51) Int. Cl.: F16C 29/02, F16C 32/06

(54) **HYDROSTATISCHE PROFILSCHIENENFÜHRUNG**
HYDROSTATIC PROFILE RAIL GUIDE
DISPOSITIF DE GUIDAGE DE RAIL PROFILE HYDROSTATIQUE

(30) Priorität: 13.08.2005 DE 102005038341
(43) Veröffentlichungstag der Anmeldung: 30.04.2008
(73) Patentinhaber: Schaeffler Technologies GmbH & Co. KG, 91074 Herzogenaurach (DE)
(72) Erfinder: RUDY, Dietmar, 66501 Kleinbundenbach (DE); BAUER, Wolfgang, 66292 Riegelsberg (DE)
(86) Internationale Anmeldenummer: PCT/EP2006/007725
(87) Internationale Veröffentlichungsnummer: WO 2007/019972

(56) Entgegenhaltungen:
- EP-A2- 0 304 090
- WO-A-99/53207
- DE-A1- 2 754 395
- DE-A1- 3 630 485
- US-A- 4 506 935
- US-A1- 2005 147 332

## Beschreibung

Die vorliegende Erfindung betrifft eine hydrostatische Profilschienenführung, bei der ein Führungswagen auf einer Führungsschiene hydrostatisch gelagert ist.

Aus US 2004/0042689 A1 beispielsweise ist eine hydrostatische Profilschienenführung bekannt geworden, wobei der Führungswagen an seinen der Führungsschiene zugewandten Seiten mit mehreren Drucktaschen zur Beaufschlagung mit Hydraulikflüssigkeit versehen ist. Über eine externe Druckversorgung wird fortwährend Schmierstoff über Einlasskanäle in die Drucktaschen gepresst, wobei auf diese Weise Lagerflächen des Wagens und der Führungsschiene stets durch einen dünnen Schmierfilm voneinander getrennt sind. Dadurch tritt nur Flüssigkeitsreibung auf, die proportional zur Geschwindigkeit ist, mit der sich die Lagerflächen gegeneinander bewegen. Im Grenzfall laufen hydrostatische Lager reibungsfrei. Ein Stick-Slip-Effekt tritt nicht auf. Derartige hydrostatische Profilschienenführungen ermöglichen hochgenaue Positionsregelungen im Sub-Mikrometerbereich.

Der Führungswagen weist zwei durch einen Boden miteinander verbundene Schenkel auf, die die Führungsschiene umgreifen. Sowohl am Boden als auch an den Schenkeln des Führungswagens sind Drucktaschen ausgebildet. Damit in allen Drucktaschen stets ein Druck gewährleistet ist, der einen stetigen Schmierfilm zwischen den Lagerflächen bereitstellt, sind Drosseln eingeschaltet, die eine reproduzierbare Abhängigkeit zwischen dem Taschendruck und der Durchflussmenge des Druckmittels bewerkstelligen. Bei der US 2004/0042689 A1 sind diese Vordrosseln durch besondere Lagertaschen am Führungswagen gegeben. Allerdings erfordern diese Art von Drosseln ein sehr intensive fertigungstechnische Bearbeitung des Führungswagens.

Es ist Aufgabe der vorliegenden Erfindung, eine alternative hydrostatische Profilschienenführung vorzuschlagen, bei der der Fertigungsaufwand des Führungswagens zur Bereitstellung der Drosseleinrichtung reduziert ist.

Erfindungsgemäß wird diese Aufgabe durch die hydrostatische Profilschienenführung des Anspruchs 1 gelöst. Dadurch, dass für jede Drucktasche eine an dem Führungswagen als Einbauelement ausgebildete Drossel vorgesehen ist, bietet die Erfindung verschiedene Vorteile: Zum einen entfallen aufwendige Bearbeitungen am Führungswagen, da die als Einbauelemente ausgebildeten Drosseln zum Beispiel Zukaufteile sein können, die beispielsweise in eine Aufnahme des Führungswagens eingesetzt werden können. Des Weiteren ist mit der erfindungsgemäßen hydrostatischen Profilschienenführung sichergestellt, dass jede Drucktasche unabhängig von den anderen Drucktaschen angesteuert werden kann. Diese beispielsweise als Einbauelemente ausgebildeten Drosseln können ab Werk auf eine bestimmte Kennlinie eingestellt sein und schließlich in den Führungswagen eingebaut werden.

Üblicherweise werden solche Drosseln durch so genannte Kapillardrosseln oder auch durch Membrandrosseln gebildet. Diese Kapillardrosseln können gegebenenfalls für die vorliegende Erfindung bevorzugt sein, da Kapillardrosseln kleinbauend sind und in günstiger Weise in den Führungswagen integriert werden können. Drosselventile gehören zur Gruppe der Stromventile. Diese auch für diese Erfindung geeigneten Drosselventile können als Schlitzdrosseln den Volumenstrom begrenzen. Diese Schlitzdrosseln können auch mit einem Rückschlagventil versehen sein. Sie können ferner als Einschraubventil ausgebildet sein, so dass sie beispielsweise in Gewindebohrungen des Führungswagens einschraubbar sind.

Mit dieser erfindungsgemäßen hydrostatischen Profilschienenführung sind somit Anordnungen realisierbar, bei der alle Drosseln innerhalb des Lichtraumprofils des Führungswagens angeordnet sind. In anderen Worten ausgedrückt: Die Drosseln sind sämtlich innerhalb des Querschnittsumrisses des Führungswagens angeordnet.

Eine besonders kleinbauende hydrostatische Profilschienenführung sieht einen Führungswagen vor, bei dem eine externe Druckquelle an einen gemeinsamen Sammelanschluss des Führungswagens angeschlossen werden kann, wobei alle Drosseln an diesen gemeinsamen Sammelanschluss angeschlossen sind. Die Hydraulikflüssigkeit gelangt über die externe Druckquelle durch den Sammelanschluss zu allen Drosseln und von dort schließlich mit dem eingestellten Druck in die jeweilige Drucktasche der hydrostatischen Profilschienenführung.

In günstiger Weise können sowohl die als Einbauelement ausgebildeten Drosseln, als auch der Sammelanschluss an einem Kopfstück des Führungswagens vorgesehen sein, das mit Zuführkanälen versehen sein kann, die einerseits an den Sammelanschluss und die andererseits jeweils an eine der Drosseln angeschlossen sind. Diese Zuführkanäle können an derartigen im Spritzgussverfahren hergestellten Kopfstücken in günstiger Weise beispielsweise im Spritzverfahren geformt werden. Alternativ sind auch spangebende Herstellverfahren denkbar, die aber aufwendiger sein können. Anstelle eines Führungswagens, der einen Tragkörper und ein getrennt hergestelltes Kopfstück aufweist, mag es je nach Anwendung zweckmäßig sein, einen Führungswagen vorzusehen, bei dem das Kopfstück einstückig mit dem Tragkörper verbunden ist.

Nachstehend wird die Erfindung anhand eines in insgesamt vier Figuren abgebildeten Ausführungsbeispieles erläutert. Es zeigen:
- Figur 1: eine perspektivische Darstellung einer hydrostatischen Profilschienenführung,
- Figur 2: die hydrostatische Profilschienenführung im Querschnitt, in schematischer Darstellung,
- Figur 3: ein Funktionsschema der erfindungsgemäßen hydrostatischen Profilschienenführung und
- Figur 4: eine Draufsicht auf die erfindungsgemäße hydrostatische Profilschienenführung.

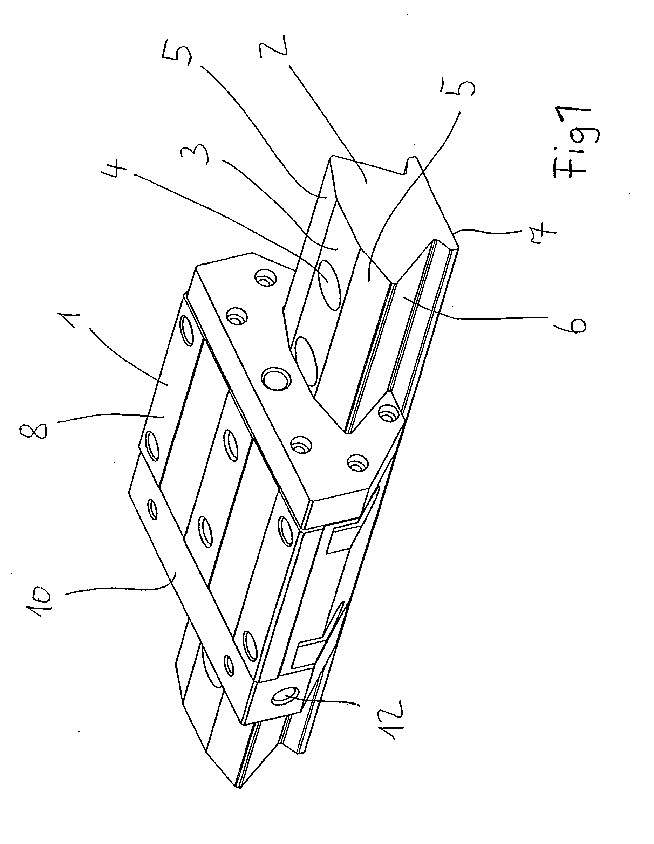

Die in den Figuren 1 bis 4 abgebildete erfindungsgemäße Profilschienenführung umfasst einen Führungswagen 1, der auf einer Führungsschiene 2 hydrostatisch gelagert ist. Die Führungsschiene 2 hat einen Kopfabschnitt, der dem Führungswagen 1 zugewandt ist und einen Fußabschnitt, der einem hier nicht abgebildeten Maschinenteil zugewandt ist, auf dem die Führungsschiene 2 befestigt ist. An ihrem Kopfabschnitt ist die Führungsschiene 2 entlang der Längsachse der Profilschienenführung mit einer Mittelfläche 3 versehen. Die Führungsschiene 2 ist mit einer Vielzahl von entlang der Führungsschiene angeordneten Durchgangsöffnungen 4 versehen, durch die hier nicht abgebildete Befestigungsschrauben zum Befestigen der Führungsschiene an dem weiter oben erwähnten Maschinenteil vorgesehen sind. Diese Durchgangsöffnungen 4 durchbrechen die Mittelfläche 3 der Führungsschiene 2.

Die Führungsschiene 1 ist an ihrem Kopfabschnitt mit zwei oberen Lagerflächen 5 und zwei unteren Lagerflächen 6 versehen. Die oberen Lagerflächen 5 sind eben ausgebildet; Sie sind zu der Mittelfläche 3 geneigt angeordnet, wobei die eine obere Lagerfläche 5 zur einen Seite der Mittelfläche 3 und die andere obere Lagerfläche 5 zur anderen Längsseite der Mittelfläche 3 angeordnet ist. Die unteren Lagerflächen 6 sind unterhalb der oberen Lagerflächen 5 angeordnet. Diese unteren Lagerflächen 6 sind sowohl zu der Mittelfläche 3 als auch zu den oberen Lagerflächen 5 geneigt angeordnet.

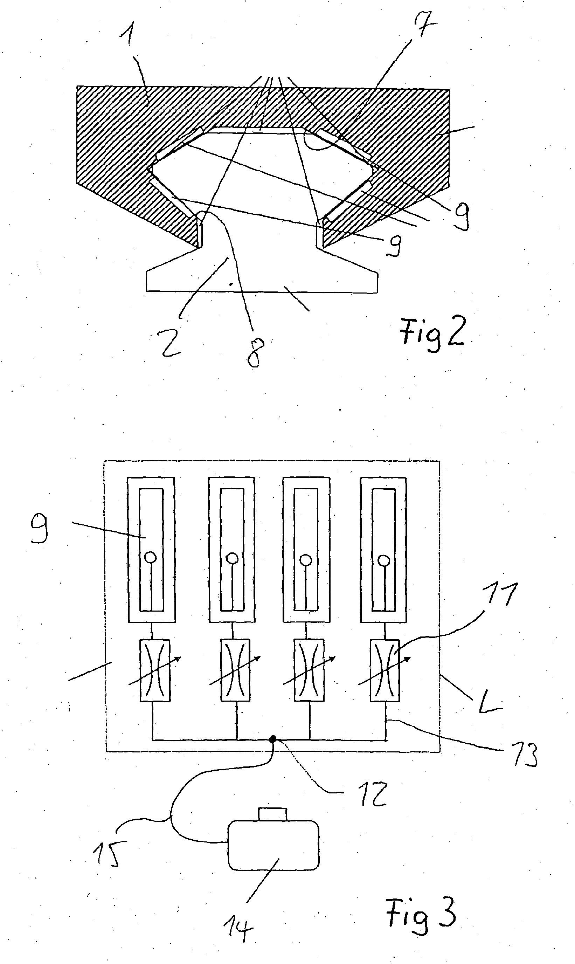

Der Führungswagen ist mit weiteren oberen und unteren Lagerflächen 7, 8 versehen, wobei die oberen und unteren Lagerflächen 5, 6, 7, 8 des Führungswagens und der Führungsschiene einander zugeordnet sind. In Figur 2 sind diese Lagerflächen angedeutet.

Der Figur 2 ist ferner zu entnehmen, dass an dem Führungswagen 1 insgesamt vier Drucktaschen 9 für die oberen und unteren Lagerflächen 5, 6 ausgebildet sind, die mit Hydraulikflüssigkeit beaufschlagt werden können. Zwischen den Lagerflächen 5, 6, 7, 8 kann im Betrieb der hydrostatischen Profilschienenführung ein stetiger Schmierfilm aufgebaut werden.

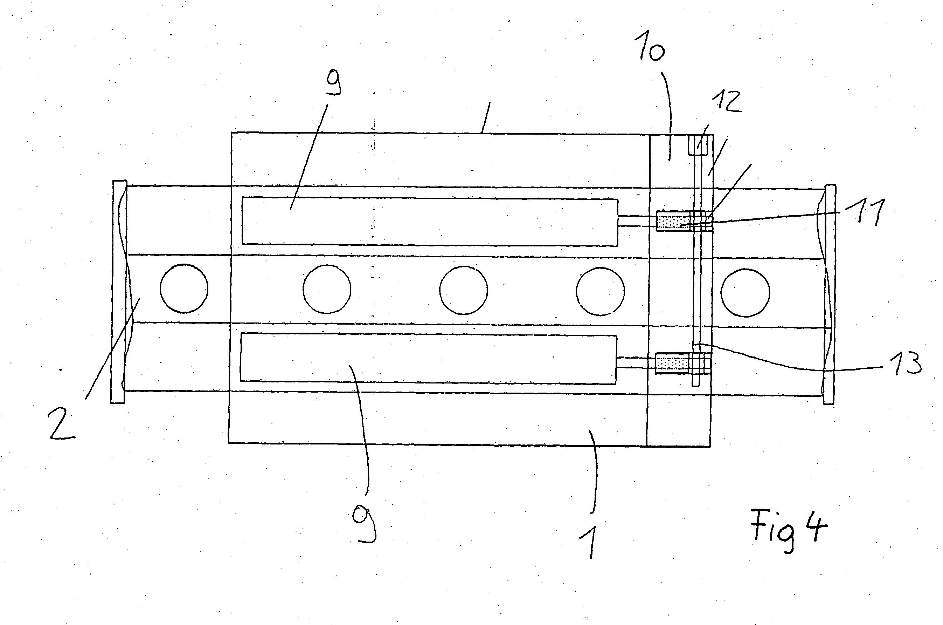

Zwei dieser Drucktaschen 9 sind in der Figur 4 in einer Draufsicht auf die erfindungsgemäße hydrostatische Profilschienenführung schematisch abgebildet. Dieser schematischen Abbildung kann entnommen werden, dass der Führungswagen 1 einen Tragkörper 10a und ein daran stirnseitig befestigtes Kopfstück 10 aufweist. Das Kopfstück 10 ist mit mehreren Drosseln 11 versehen, wobei diese Drosseln 11 vorliegend als Kapillardrosseln ausgebildet sind. Diese Drosseln 11 sind in das Kopfstück vollständig integriert. Für jede Drucktasche 9 ist eine Drossel 11 vorgesehen. Die Drosseln 11 sind parallel geschaltet. Sie münden in einen gemeinsamen Sammelanschluss 12, der an einer Seite des Kopfstückes 12 angeordnet ist. In dieses Kopfstück 10 sind ferner Zuführkanäle 13 integriert, die einerseits an alle Drosseln 11 und die andererseits an den gemeinsamen Sammelanschluss 12 angeschlossen sind. An diesen Sammelanschluss 12 kann beispielsweise eine Ölpumpe über einen Druckschlauch angeschlossen werden.

Figur 1 zeigt auch das in Figur 4 lediglich schematisch abgebildete Kopfstück 10 mit dem Sammelanschluss 12.

Figur 3 schließlich zeigt in schematischer Abbildung die Schaltung der Drucktaschen 9 und der Drosseln 11. Mit einer gestrichelten Linie L ist hier die Systemgrenze des Führungswagens angedeutet. Diese Figur zeigt ferner eine externe Druckquelle 14 die über einen Druckschlauch 15 an den Sammelanschluss 12 angeschlossen ist. Hier ist deutlich die parallele Schaltung der Drosseln 11 zu erkennen. Ferner sind hier auch die Wege der Zuführkanäle 13 zu erkennen, die einerseits an den zentralen Sammelanschluss 12 und die andererseits jeweils an einen der Drosseln 11 angeschlossen sind. Die Drosseln 11 sind schließlich an die Drucktaschen 9 angeschlossen; Jeder Drossel 11 ist genau eine Drucktasche 9 zugeordnet.

Insbesondere der Figur 1 ist zu entnehmen, dass alle Drosseln 11 innenhalb des Lichtraumprofils der hydrostatischen Profilschienenführung integriert sind. Das bedeutet, dass eine erfindungsgemäße hydrostatische Profilschienenführung problemlos gegen eine Profilschienenwälzführung gemäß DIN 645-1 ausgetauscht werden kann. In dieser zitierten DIN 645-1 sind die Außenmaße von Profilschienenwälzführungen definiert. Erfindungsgemäße hydrostatische Profilschienenführungen können mit entsprechenden Außenmaßen versehen sein.

### Bezugszahlenliste

- 1: Führungswagen
- 2: Führungsschiene
- 3: Mittelfläche
- 4: Durchgangsöffnung
- 5: obere Lagerfläche
- 6: untere Lagerfläche
- 7: obere Lagerfläche
- 8: untere Lagerfläche
- 9: Drucktasche
- 10: Kopfstück
- 10a: Tragkörper
- 11: Drossel
- 12: Sammelanschluss
- 13: Zuführkanal
- 14: Druckquelle

## Patentansprüche

1. Hydrostatische Profilschienenführung, mit einem auf einer Führungsschiene (2) hydrostatisch gelagerten Führungswagen (1), der an der Führungsschiene (2) zugewandten Seiten mit mehreren Drucktaschen (9) zur Beaufschlagung mit Hydraulikflüssigkeit versehen ist, wobei Drosseln (11) zur Einstellung eines Volumenstroms in den Drucktaschen (9) vorgesehen sind, **dadurch gekennzeichnet, dass** für jede Drucktasche (9) jeweils eine an dem Führungswagen (1) als Einbauelement ausgebildete Drossel (11) vorgesehen ist, wobei der Führungswagen (1) einen an alle Drosseln (11) angeschlossenen gemeinsamen Sammelanschluß (12) für eine die Hydraulikflüssigkeit fördernde externe Druckquelle (14) aufweist, und wobei der Führungswagen (1) einen mit den Drucktaschen (9) versehenen Tragkörper (10a) und ein stirnseitig an dem Tragkörper (10a) angeordnetes Kopfstück (10) aufweist, in das die Drosseln (11) integriert sind.

2. Hydrostatische Profilschienenführung nach Anspruch 1, bei der das Kopfstück (10) mit Zuführkanälen (13) versehen ist, die einerseits an den Sammelanschluß (12) und andererseits jeweils an eine der Drosseln (11) angeschlossen sind.

3. Hydrostatische Profilschienenführung nach Anspruch 1, bei der die Drossel (11) durch eine Kapillardrossel oder durch eine Membrandrossel gebildet ist.

4. Hydrostatische Profilschienenführung nach Anspruch 1, bei der die Drosseln (11) innerhalb des Querschnittsumrisses des Führungswagens (1) angeordnet sind.

## Claims

1. Hydrostatic profiled rail guide, having a guide carriage (1) which is hydrostatically mounted on a guide rail (2) and which is provided, on the sides facing toward the guide rail (2), with multiple pressure pockets (9) for charging with hydraulic fluid, wherein throttles (11) are provided for adjusting a volume flow rate into the pressure pockets (9), **characterized in that** in each case one throttle (11), formed as an insert element on the guide carriage (1), is provided for each pressure pocket (9), wherein the guide carriage (1) has a common collective connection (12), connected to all of the throttles (11), for an external pressure source (14) which delivers the hydraulic fluid, and wherein the guide carriage (1) has a supporting body (10a), which is provided with the pressure pockets (9), and a head part (10), which is arranged on the face side of the supporting body (10a) and into which the throttles (11) are integrated.

2. Hydrostatic profiled rail guide according to Claim 1, in which the head part (10) is provided with feed ducts (13) which are connected at one side to the collective connection (12) and at the other side to in each case one of the throttles (11).

3. Hydrostatic profiled rail guide according to Claim 1, in which the throttle (11) is formed by a capillary throttle or by a diaphragm throttle.

4. Hydrostatic profiled rail guide according to Claim 1, in which the throttles (11) are arranged within the cross-sectional outline of the guide carriage (1).

## Revendications

1. Dispositif de guidage de rail profilé hydrostatique, comprenant un chariot de guidage (1) monté de manière hydrostatique sur un rail de guidage (2), lequel chariot de guidage est pourvu, sur des côtés tournés vers le rail de guidage (2), de plusieurs poches de pression (9) en vue d'une sollicitation par un fluide hydraulique, des étranglements (11) étant prévus pour ajuster un débit volumique dans les poches de pression (9), **caractérisé en ce qu'**il est prévu à chaque fois pour chaque poche de pression (9) un étranglement (11) réalisé en tant qu'élément intégré sur le chariot de guidage (1), le chariot de guidage (1) comprenant un raccordement collecteur (12) commun, raccordé à tous les étranglements (11), pour une source de pression (14) externe refoulant le fluide hydraulique, et le chariot de guidage (1) comprenant un corps de support (10a) pourvu des poches de pression (9) et une pièce de tête (10) disposée du côté frontal sur le corps de support (10a) dans laquelle sont intégrés les étranglements (11).

2. Dispositif de guidage de rail profilé hydrostatique selon la revendication 1, dans lequel la pièce de tête (10) est pourvue de canaux d'alimentation (13) qui sont raccordés d'une part au raccordement collecteur (12) et d'autre part à chaque fois à l'un des étranglements (11).

3. Dispositif de guidage de rail profilé hydrostatique selon la revendication 1, dans lequel l'étranglement (11) est formé par un étranglement capillaire ou par un étranglement à diaphragme.

4. Dispositif de guidage de rail profilé hydrostatique selon la revendication 1, dans lequel les étranglements (11) sont disposés à l'intérieur du contour en section transversale du chariot de guidage (1).
